# EUROPEAN PATENT SPECIFICATION

(11) **EP 3 917 327 B1**
(45) Date of publication and mention of the grant of the patent: **14.02.2024**
(21) Application number: 20856491.4
(22) Date of filing: 14.02.2020
(51) Int. Cl.: A23J 1/14, C11B 1/10, A23L 19/00, A23K 10/30, A23K 20/147, A23L 33/185

(54) **METHOD FOR PRODUCING A PROTEIN SUNFLOWER CONCENTRATE**
VERFAHREN ZUR HERSTELLUNG EINES PROTEINSONNENBLUMENKONZENTRATS
PROCÉDÉ DE PRODUCTION D'UN CONCENTRÉ DE TOURNESOL PROTÉIQUE

(30) Priority: 30.08.2019 UA 201909566 U
(43) Date of publication of application: 08.12.2021
(73) Proprietor: Limited Liability Company "Potoky", Dnipro, 49074 (UA)
(72) Inventor: YAROVYI, Yevhenii, Dnipro, 49128 (UA)
(74) Representative: AOMB Polska Sp. z.o.o.
(86) International application number: PCT/UA2020/000014
(87) International publication number: WO 2021/040671

(56) References cited:
- WO-A1-2019/048695
- EA-B1- 023 098
- RU-A- 2009 127 308
- RU-C1- 2 379 941
- RU-C1- 2 379 941
- UA-C2- 85 385
- UA-C2- 85 385
- US-A- 4 008 210
- DATABASE FSTA [Online] INTERNATIONAL FOOD INFORMATION SERVICE (IFIS), FRANkFURT-MAIN, DE; 16 July 2014 (2014-07-16), KHADZHIISKI TS ET AL: "Optimization of heat-moisture treatment for sunflower seed grist. (translated)", XP002807240, Database accession no. FS-1992-11-N-0036
- Litvineko O A: "The technology of food meal from cover-free sunflower seed kernels", Thesis, 18 June 2010 (2010-06-18), pages 1-23, XP055837467, Kharkov

## Description

### Technical field

The method relates to processing of sunflower seed, in particular, to producing a protein (albinotic) concentrate, as well as to a technological process for producing this product.

Proteins of oil seeds have a high biological value and may be effectively used for nutritious and feeding purposes.

A typical method for producing protein additives from oil cultures, the method comprising successive extracting the proteins by neutral or alkaline solvents, separating the protein extract from a solid residue, precipitating the proteins and drying a protein paste.
(http://www.vuzlib.com.ua/articles/book/20416B%D1%96okh%D1%96m%D1%96ja ta_tekhnolog%D1%96ja/27.html)

A drawback of such method lies in a low yield of the protein concentrate (22% of a cake mass) that is produced in the course of the successive extraction of a sunflower cake in the neutral and alkaline solutions.

According to a way of implementation and a set of essential features, a method for producing a protein food concentrate from a sunflower kernel has been taken as the closest analogue (prototype). This method comprises drying the kernel, making flakes from the kernel, separating the oil from the flakes, extracting the oil from the flakes with a solvent, distilling the solvent from the cake flake. The essence of the invention lies in that the kernel without flakes is dried in a boiling layer at a temperature of drying air of 65-80 °C for 5-10 minutes up to a moisture of 2.0-2.5%, then the kernel is transformed into flakes at a temperature of 60-80 °C by pressing the kernel up to a thickness of 0.2-0.5 mm, thereby producing up to 40.0% of the oil comprised in the kernel; the oil is separated from the flakes by means of extracting with an organic solvent, e.g., hexan, nefras, up to a fat content in the cake flake of 1.0-1.5%. The solvent from the cake is distilled under vacuum. The cake flake is dried in a boiling layer at a temperature of drying air of 65-70 °C for 5-6 minutes up to a moisture of 2.0-2.5%, and wherein a seed film shell of the kernel is removed by aspiration, the cake flake is milled into flour and packed in an inert gas atmosphere (Patent of Ukraine No. 85385 C2 as of 26.01.2009).

Relative drawbacks of the prototype are the following:
- the drying is performed by means of the boiling layer that has a negative impact on the nutritional value of the product (in contrast to the claimed method, wherein the drying is performed by environmental air heated by steam);
- use of such temperature modes during the wet-heat treatment of the meal, extraction, distilling the solvent in this method lead to reduction of the nutritional value of the output product as compared to the claimed method. The invention is defined by the appended claim.

### The claimed method is characterized in that:

- the drying of the sunflower seeds is performed at a temperature of 40-70°C; shelling the sunflower seeds, separating the sunflower flakes from the kernel, milling the kernels;
- the wet-heat treatment of the meal is performed at a temperature of 70-85 °C up to a moisture content of 7-9%;
- the extraction of the oil from a cake shell with the organic solvent is performed at a temperature of 55-60°C;
- the distillation of the solvent from the produced mass is performed under vacuum and a temperature of 140°C in the medium of overheated hexane during 20 mins, wherein the temperature of the product is mot more than 70-80°C;
- after removal of the solvent, the concentrate is dried at 65-70°C up to the moisture of 6-12% and cooled up to the temperature of 35-40°C.

The protein digestibility increases up to 91%.

The - the distillation of the solvent from the product is performed in the medium of the overheated hexane and a drum-type evaporator may be used in the technological process.

A technical problem to be solved by the utility model lies in maintaining a high protein content and other nutritive substances in the output product.

A technical effect that is achieved when using the claimed method enables to reduce a degree of destruction (denaturation) of the protein due to low temperatures during the technological process resulting in that the protein digestibility increases up to 91%. Due to this, new digestibility coefficients of proteins, fats and nitrogen-free extractive substances in birds, pigs and cattle are established.

Solution of the technical problem lies in implementation of a 3-stage purification of the sunflower seeds, shelling the sunflower seeds, separating the sunflower flakes from the kernel, milling the kernel, conditioning the meal, pressing the septum, cooling a press cake, extracting the press cake, purifying the miscella, distillation of the miscella, distillation of the solvent, toasting and cooling the sunflower protein concentrate.

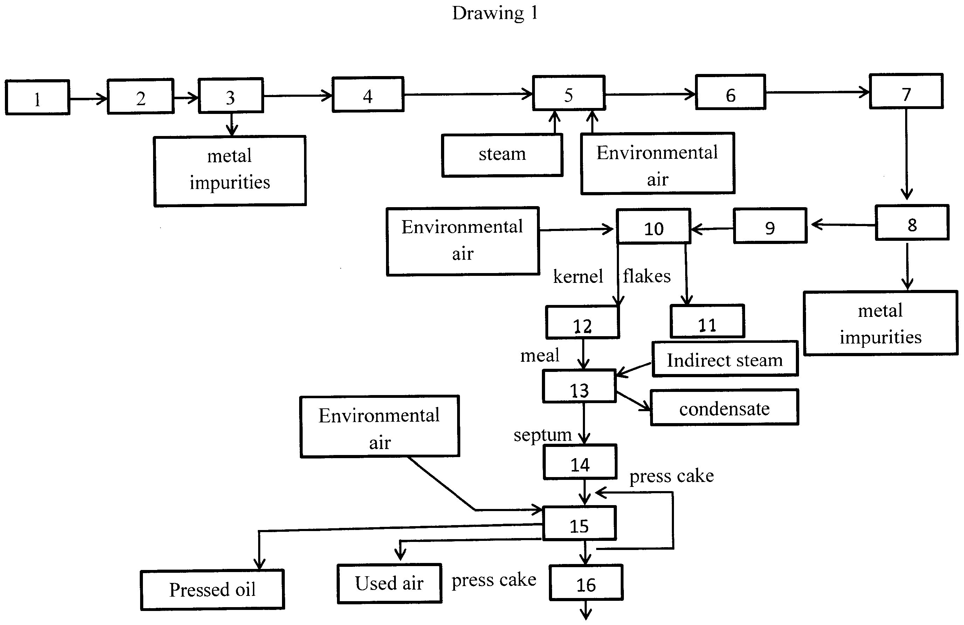

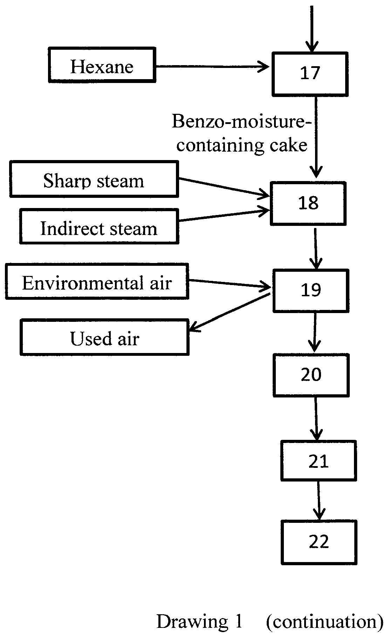

The essence of the claimed utility model is shown in Fig. 1 "A flow chart of the technological process for producing the sunflower protein concentrate for feeding agricultural animals" is explained as follows.

The claimed method for producing the nutritive sunflower protein concentrate comprises the technological process for producing the product. During the production, a mass fraction of a crude protein in the absolutely dry matter is 46-52%. Such value is achieved due to the fact that the drying of the sunflower seeds is performed at a temperature of 40-70°C followed by the wet-heat treatment of the meal at a temperature of 70-85°C. The next step is extraction of the oil from the cake shell with an organic solvent that is performed at a temperature of 55-60°C, then the distillation of the solvent from the produced mass is performed under vacuum and at a temperature of 140°C in the medium of the overheated hexane during 20 mins, wherein the temperature of the product is not more than 70-80°. After removal of the solvent, the concentrate is dried at 65-70° up to the moisture of 6-12% and cooled up to the temperature of 35-40°.

### Use of the method.

Reference designations for the drawing 1/1:
1 - Receiving the raw material;
2- Unloading
3- Purifying from metal impurities
4- 3-stage purification
5- Drying
6- Storing
7- Weighting and calibrating
8- Purifying from metal impurities
9- Shelling
10 - Separating the huller
11 - Releasing the flakes
12 - Milling of the kernel
13 - Wet-heat treatment
14 - Purifying from metal impurities
15 - Pressing
16 - Cooling the press cake
17 - Extraction
18 - Distillating the solvent from the cake, toasting
19 - Cooling the cake
20 - Weighting the cake
21 - Storing the cake
22 - Releasing the cake

Firstly, **receiving the raw material 1** is performed, this step also comprises check for quality and safety parameters, then **unloading of the raw material 2** is performed. - the seeds are unloaded into a receiving hopper by gravity flowing through magnetic detectors, wherein **purification from metal impurities 3** takes place. Afterwards, the seeds are fed to the three-stage purification on separators by transportation lines. **The three-stage purification 4** - first stage - rough purification on a drum-type scalperator, afterwards the seeds are fed to the second and third stage being a purification in sieve separators. After the purification is completed, the seeds are fed to the drying stage. **Drying 5.** - is performed by environmental air (heated by steam) at he temperature of 40-70°C. Next stage - **storage 6.** - after the drying, if needed, the seeds are fed to a silage for long-term storage, afterwards they are fed to a shelling segment for processing. Then, **weighting and calibration 7** are performed. - the sunflower seeds from the seed elevator are fed to the shelling segment to hopper scales. After weighting, the seeds are fed to a buffer seed hooper by a scooper through an electromagnetic separator that is intended to remove metal impurities. Afterwards, the seeds are fed to calibration machines in order to remove 3 fractions. (3.75 mm, 3.0-3.75 mm, 2.5-3.0 mm). Then the **purification from the metal impurities 8** is performed. Afterwards, the **shelling 9** is performed. - the calibrated seeds are fed to shelling machines. Then, **separation of a huller 10** is performed. - after the shelling machines, the huller is gravity fed to the sieve separators in order to be separated into fractions. Having passed through the sieve separators, the huller is separated into fractions in the aspiration chamber of the separator due to variety of aerodynamic properties of the flakes and kernel. The kernel fraction having a content of the flakes of from 0 to 4% and an oil dust (a lift-off from the lower sieve) are fed to a pressing segment for further processing. **Release of the flakes 11.** - the produced fraction of the flakes is fed to the area of granulation of the flakes. **Milling of the kernel 12.** - the kernel and the oil dust from the shelling segment are distributed to loading hoppers of flakers (roller-type millers) by a chain conveyor for milling the raw material. Then, **the wet-heat treatment 13** is performed. - the milled material in the form of the meal is fed to a horizontal conditioner from the flaker (roller-type miller) that operates for one passage. The meal having the moisture of 4.5-5.5% comes to the conditioner, wherein it is subjected to the wet-heat treatment by means of the indirect and sharp steam. The first processing stage in the conditioner starts from wetting the material by the sharp steam up to the moisture of 7-9%, in the source of passage of the material along the internal surface of the conditioner, the meal is heated up to the temperature of 70-85°C and, at the same time, the excessive moisture is removed from the meal. The septum has the following parameters at the output from the conditioner: moisture - 3-5%, temperature 70-85°C. Afterwards, **purification from the metal impurities 14** is performed. Then, the **pressing 15** is performed. - the prepared material is distributed to feeders of forepresses from the conditioner for preliminary expression of the oil (forepressing). Afterwards, **cooling of the press cake 16** is performed. - the press cake shell that comes from the presses is fed through the cooler to a hopper of the extractor. Then, the **extraction 17** is performed. - the material prepared for the extraction - the forepressed press cake having the temperature of 55-60°C is fed to the extractor from the pressing segment. The material that is fed to the extractor for extraction forms a layer in compartments of the transporter and is immediately irrigated by the miscella having a high concentration. In the course of moving of the band conveyor with sections from the loading hopper to the unloading, the material being extracted is gradually deoiled and, upon delivery to the last zone, is irrigated by a pure solvent. After passage of the last zone, the deoiled material passes through a drain zone. Then, **distillation of the solvent from the cake, toasting 18** are performed. - the deoiled material is removed from the extractor in a continuous and uniform manner to the unloading hopper of the extractor. Then, processing of the material is performed in toasters No.1 and No. 2, wherein the overheated solvent steam at a temperature of 140-150°C is used as a heat carrier, during 20 mins under the vacuum. The material is fed to a supply hopper of the toaster No.1. Then, it is fed to the toaster No.2. The drum-type 1st and 2nd toasters are intended to remove the solvent from the cake and its further recovery, while the product temperature is 70-80°C, drying up to the moisture value of 6-12% and cooling up to the temperature of 35-40°C. Afterwards, **cooling of the cake 19** is performed. - cooling the product up to the temperature of 35-40°C is performed by means of the environmental air. Then, **weighting of the cake 20** is performed. Afterwards, the cake is transported to a cake warehouse for **storing the cake 20.** Then, **release of the cake 22** is performed.

### Application example of the method.

Use of the claimed method for producing a nutritive protein concentrate has enabled to achieve the following technical results:
Parameters of the nutritive value of the product:

| Name of the parameter | Value |
|---|---|
| Cumulative mass fraction of soluble proteins in the cake to the overall protein amount, % not less than | 68.0 |

Physical and chemical parameters:

| Name of the parameter | Acceptable level |
|---|---|
| Moisture mass fraction % | 5-11 |
| Mass fraction of the pure protein in the fully dry matter % | 46-52 |
| Mass fraction of the crude fiber in the fully dry matter % | 7-12 |
| Mass fraction of the fat and extractive substances in the fully dry matter % | 0.4-1.7 |
| Mass fraction of metal impurities % not more than | |
| - particles having a size of 2 mm inclusively | 0.01 |
| - particles having a size of more than 2 mm with sharp edges | Not accepted |
| Large particles for the non-granulated concentrate: passing through the sieve having opening of a diameter, mm: | |
| 0.8 % | 95-98 |
| 0.25 % | 2-5.0 |
| Diameter of the granules, mm | from 6.0 to 20.0 |
| Length of a single granule, mm | from 10.0 to 26.0 |

## Claims

1. A method for producing a nutritive protein sunflower concentrate, the method comprising: extraction of an oil with a solvent from a mass produced of sunflower kernels, distillation of the solvent from the mass, drying the concentrate, **characterized in that** the method comprises the following steps: the sunflower seeds are dried at a temperature of 40-70°C, shelling the sunflower seeds, separating the sunflower flakes from the kernel, the kernels are milled and directly thereafter the milled material is subjected to wet-heat treatment performed up to the moisture of 7-9% at a temperature of 70-85°C, after which the oil is extracted from a cake shell with an organic solvent at a temperature of 55-60°C, the solvent is distillated from the produced mass under the vacuum and at a temperature of 140°C in a medium of an overheated hexane during 20 mins, wherein the temperature of the product is not more than 70-80°C, after removal of the solvent the concentrate is dried at 65-70°C up to a moisture of 6-12% and cooled up to a temperature of 35-40°C.

## Patentansprüche

1. Ein Verfahren zur Herstellung eines nahrhaften Sonnenblumenprotein-Konzentrats, wobei das Verfahren folgendes umfasst: die Ölextraktion mit einem Lösungsmittel aus einer aus Sonnenblumenkernen hergestellten Masse, die Destillation des Lösungsmittels aus der Masse, die Trocknung des Konzentrats, **dadurch gekennzeichnet, dass** das Verfahren die folgenden Verfahrensschritte umfasst: die Trocknung der Sonnenblumenkerne bei einer Temperatur von 40-70 °C, das Schälen der Sonnenblumenkerne, die Abtrennung der Sonnenblumenflocken vom Kern, das Mahlen der Kerne und unmittelbar danach die nasse Wärmebehandlung des gemahlenen Materials bis zu einer Feuchtigkeit von 7-9% bei einer Temperatur von 70-85 °C, wonach das Öl aus der Kuchenschale mit einem organischen Lösungsmittel bei einer Temperatur von 55-60 °C extrahiert wird, das Lösungsmittel aus der hergestellten Masse unter Vakuum und bei einer Temperatur von 140 °C in einem Medium von überhitztem Hexan während 20 Minuten destilliert wird, wobei die Temperatur des Produkts nicht mehr als 70-80 °C beträgt, das Konzentrat nach Entfernung des Lösungsmittels bei 65-70 °C bis zu einer Feuchtigkeit von 6-12 % getrocknet und auf eine Temperatur von 35-40 °C abgekühlt wird.

## Revendications

1. Un procédé de production d'un concentré protéique nutritif de tournesol, le procédé comprenant : extraction d'une huile avec un solvant à partir d'une masse produite de graines de tournesol, distillation du solvant à partir de la masse, séchage du concentré, **caractérisé en ce que** le procédé comprend les étapes suivantes : les graines de tournesol sont séchées à une température de 40-70°C, décorticage des graines de tournesol, séparation des flocons de tournesol des graines décortiquées, les graines décortiquées sont broyées et, immédiatement après, la matière broyée est soumise à un traitement thermique humide effectué jusqu'à une humidité de 7-9% à une température une température de 70-85°C, après quoi l'huile est extraite d'une coque de gâteau avec un solvant organique à une température de 55-60°C, le solvant est distillé de la masse produite sous vide et à une température de 140°C dans un milieu d'hexane surchauffé pendant 20 minutes, dans lequel la température du produit ne dépasse pas 70-80°C, après élimination du solvant, le concentré est séché à 65-70°C jusqu'à une humidité de 6-12% et refroidi jusqu'à une température de 35-40°C.
